# EUROPEAN PATENT SPECIFICATION

(11) **EP 1 036 111 B1**
(45) Date of publication and mention of the grant of the patent: **14.07.2004**
(21) Application number: 98915299.6
(22) Date of filing: 03.04.1998
(51) Int. Cl.: C08L 23/04, C08K 13/02, C09K 21/14

(54) **FLAME RETARDED HEAT SHRINK TUBE**
THERMISCH-SCHRUMPFENDE FLAMMGEHEMMENDE SCHLÄUCHE
TUBES THERMORETRACTABLES STABILISES ANTI-FEU

(30) Priority: 05.12.1997 US 985936
(43) Date of publication of application: 20.09.2000
(73) Proprietor: MINNESOTA MINING AND MANUFACTURING COMPANY, St. Paul, Minnesota 55133-3427 (US)
(72) Inventor: BANDYOPADHYAY, Pradip, K., Saint Paul, MN 55133-3427 (US)
(74) Representative: Meyers, Hans-Wilhelm, Dr.Dipl.-Chem.
(86) International application number: PCT/US1998/006763
(87) International publication number: WO 1999/029776

(56) References cited:
- EP-A- 0 646 623
- GB-A- 1 529 236
- US-A- 3 819 575
- US-A- 5 578 666
- PATENT ABSTRACTS OF JAPAN vol. 007, no. 201 (C-184), 6 September 1983 & JP 58 101128 A (TOKYO SHIBAURA DENKI KK), 16 June 1983 & DATABASE WPI Week 8330 Derwent Publications Ltd., London, GB; AN 83-719423 "combustion resistant synthetic resin composn.-"
- PATENT ABSTRACTS OF JAPAN vol. 017, no. 524 (M-1483), 21 September 1993 & JP 05 138732 A (FUJIKURA LTD), 8 June 1993 & DATABASE WPI Week 9327 Derwent Publications Ltd., London, GB; AN 93-216174 "fLAME RETARDANT POLYOLEFIN TUBE INSULATION, ETC."

## Description

### Background of the Invention

### Field of the Invention

This invention relates to flame retardant compositions comprising semi-crystalline polymers such as polyolefins. More specifically, the invention relates to flame retardant semi-crystalline polymer compositions containing melamine pyrophosphate and at least one halogenated flame retardant.

### Description of the Related Art

Semi-crystalline polymers face a major barrier of low temperature melting when they burn, and dripping of flaming particles when subjected to flame tests. This eliminates such materials when flame retardance is needed, even though they are otherwise useful for applications which require flexibility in combination with good tensile properties and other physical properties.

It is known that thermoplastic polyolefin polymers may be rendered flame resistant by the addition of organohalide compounds, such as those disclosed in 3,530,164. One problem with use of these compounds however is that they migrate through the polymer and bloom to the surface, where the exudate causes a dullness which is aesthetically displeasing. Also, of course such blooming results in loss of flame retardance.

An additional issue is the ability of such flame retardant compositions to resist dripping of flaming particles when they do burn, in order to prevent ignition of surrounding combustible materials such as carpeting, draperies or upholstery. This is especially true of low melting polymers which are useful in low temperature heat shrink applications.

U.S. Patent 3,819,575 discloses triazines such as melamine and derivations thereof inhibit bloom by organohalides. A metal compound synergist such as an antimony oxide is also present. Preferred triazines include melamine pyrophosphate.

U.S. Patent No. 4,257,931 discloses flame retardant poly(butylene terephthalate) compositions which also comprise a combination of a pentaerythrityl phosphonate and a melamine pyrophosphate in weight ratios of from 5:1 to 1:5 in order to provide a self extinguishing composition.

Therefore, it would be desirable to provide a flame retarding composition which does not bloom or drip flaming particles when it does begin to bum.

It has now been discovered that highly flame retardant ethylene vinyl acetate materials can be made which are heat-shrinkable at low to moderate temperatures and also have a high resistance to melting and dripping.

Non-dripping flame retardant compositions of the invention comprise at least one semi-crystalline polymer selected from the group consisting of ethylene vinyl acetate polymers, ethylene ethyl acetate polymers and low density polyethylene, an effective amount of melamine pyrophosphate along with a halogenated flame retardant.

### Summary of the Invention

Compositions of the invention provide heat-shrinkable flame retardant polymer compositions which resist melting and dripping flaming particles when under fire.

More specifically, the flame retardant compositions of the invention consist essentially of:
a) at least one semi-crystalline polymer selected from the group consisting of ethylene vinyl acetate, ethylene ethyl acetate, and low density polyethylene,
b) at least 1,5% melamine pyrophosphate,
c) a halogenated flame retardant, and
d) an additive selected from alkaline earth metal oxides and hydroxides, silicone dioxide, titanium dioxide, zinc oxide aluminum oxide, aluminum oxide trihydrate, magnesium hydroxide, antimony oxide.

Preferred flame retardant compositions of the invention consist essentially of:
a) at least one semi-crystalline polymer selected from the group consisting of ethylene vinyl acetate, ethylene ethyl acetate, and low density polyethylene,
b) from 1,5% to 20% melamine pyrophosphate,
c) a halogenated flame retardant selected from the group consisting of decabromo diphenyl oxide, decabromo diphenyl methane and dodecachlorodimethane dibenzocyclooctene,
d) from 2% to 30% of an additive selected from alkaline earth metal oxides and hydroxides, and
e) from 0.1% to 10% of a crosslinking agent.

The following terms have these meanings as used herein.
1. The term "non-dripping" means no molten particles drip vertically, under application of heat or flame, igniting the cotton underneath.
2. The term "consisting essentially of " means that the composition contains the components cited, and may contain small amounts of other components such as conventional adjuvants, e.g., antioxidants, dyes.
3. The term "heat-shrinkable" means articles that shrink under the application of heat to a pre-determined shape or size.
4. The term "low density polyethylene" means a polyethylene having a highly branched and widely spaced chain, and a crystallinity of 50-60%, and a density of about 0.915.

All parts, percents, and ratios are by weight unless specifically otherwise noted.

### Detailed Description of the Invention

Flame retardant compositions of the invention comprise at least one semi-crystalline polymer which melts at low temperatures, and is useful for low/moderate temperature shrink applications. Useful semi-crystalline polymers are ethylene vinyl acetate copolymers, ethylene ethyl acetate copolymers, low density polyethylene, and the like. Such compositions are available commercially under the tradename Elvax®, from E.I. DuPont de Nemours, and under designations such as DPDA, and DFDA from Union Carbide.

Compositions according to the invention also comprise at least 1,5% of melamine pyrophosphate. Preferred compositions of the invention comprise from 1.5 to 10 percent by weight melamine phosphate.

Also useful in compositions of the invention are halogenated flame retardants. Preferred flame retardants include decabromo diphenyl oxide, decabromo diphenyl methane, and dodecachlorodimethane dibenzocyclooctene, which can be represented by the following formula:

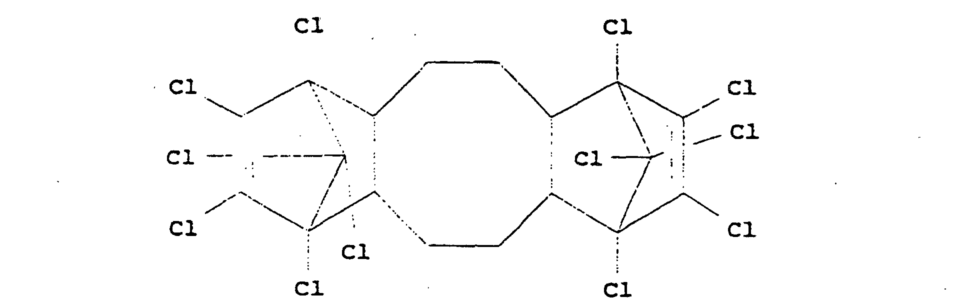

The compositions of the invention typically comprise from 10 to 40 percent by weight of the halogenated flame retardant, preferably from 15 to 30 percent.

To further improve the flame retardancy of the composition various additives such as oxides or hydroxides are be added. Useful compounds include alkaline earth metal oxides such as barium oxide, magnesium oxide, as well as such compounds as silicone dioxide, titanium dioxide, zinc oxide aluminum oxide, aluminum oxide trihydrate, antimony oxide, alkaline earth metal hydroxides.

When present, the additives generally comprises from 2 to 30 percent by weight of the total composition.

Preferred compositions of the invention also contain a crosslinking agent such as a multiacrylate. Preferred compounds include 1,4 hexanediol diacrylate, trimethylol propane triacrylate, trimethylol propane trimethacrylate. When present, the crosslinking agent generally comprises from 0.1 to 10 percent by weight of the total composition.

Compositions of the invention may also incorporate conventional adjuvants such as plasticizers, dyes, pigments, antioxidants, antistatic agents in such amounts as will not substantially affect the primary properties of the composition.

Compositions of the invention can be processed by any conventional methods such as milling the components on a two-roll mill, using a Banbury mixer, by molding the components simultaneously, by extruding.

Compositions of the invention are useful for various heat-shrinkable applications, particularly, heat-shrinkable tubing having wall thickness of from 0.5 mm to 375 mm. The compositions are also useful as backings for electrical tapes, coatings for cables and molded products, and other products in which it is desirable to have flame retardant semi-crystalline polymers.

### Test Methods

The tests for flammability of plaques or bars of material were conducted according to Underwriters Laboratories (UL) Standard Test UL-94, V0 flame tests.

The tests for flammability of tubing were conducted according to UL Standard Test UL-22. VW-1 test method.

### Examples

Materials for all experiments were mixed in a Haake® mixer at about 135°C and plaques of 0.8 mm.

### Example 1

| | (wt.%) |
|---|---|
| Elvax-470 | 44.1 |
| Decabromo diphenyl oxide | 27.8 |
| Antimony Trioxide | 11.2 |
| Irganox® 1010 | 1.2 |
| Irganox® 1024 | 1.2 |
| Zinc Stearate | 0.5 |
| Trimethylol tripropane triacrylate | 2.8 |
| Magnesium hydroxide | 8.2 |
| Melamine Pyrophosphate (MPP) | 3.0 |
| **Total** | **100** |

All experiments conducted here were mixed in a Haake® Mixer at 148°C, and plaques of 0.07 mm (79 µm) were molded. UL-94, V0 flame tests were conducted on these plaques. In some cases plaques were irradiated to 10 Mrads. The crosslinked plaques were found to perform better than the uncrosslinked plaques with respect to lower ignition time, but the failure by dripping mode can not be cured by crosslinking. The composition of Example 1 pass flame tests of both UL94, V0 and UL 224, VW-1 without any dripping.

### Example 2

| | (parts by wt.) |
|---|---|
| Elvax® 470 | 100 |
| Irganox® 1010 | 2.7 |
| Irganox® MD1024 | 2.7 |
| DBDPO | 55.6 |
| Sb₂O₃ | 26.7 |
| Mg(OH)₂ | 23.6 |
| MPP | 11 |

The above composition passes UL-94, V0 flame test without dripping.

### Example 3C

| | (parts by wt.) |
|---|---|
| Elvax 470 | 100 |
| Irganox 1010 | 2.7 |
| Irganox MD1024 | 2.7 |
| DBDPO | 66.7 |
| Sb₂O₃ | 26.7 |
| Mg(OH)₂ | 23.6 |

This composition does not pass UL-94, V0 flame test, as it drips flamed particle that ignites the cotton underneath. (Note the absence of MPP.)

### Example 4C

| | (parts by wt.) |
|---|---|
| Elvax 470 | 100 |
| Irganox 1010 | 2.7 |
| Irganox MD1024 | 2.7 |
| MPP | 66.7 |
| Sb₂O₃ | 26.7 |
| Mg(OH)₂ | 23.6 |

The above composition does not pass UL 94 flame test. The failure mode is dripping particles that ignite the cotton underneath. (Note the absence of halogenated flame retardants.)

### Examples 5-10

| | (parts by wt.) |
|---|---|
| Elvax 470 | 100 |
| Irganox 1010 | 2.7 |
| Irganox MD1024 | 2.7 |
| DBDPO | 55.6 |
| Sb₂O₃ | 26.7 |
| Mg(OH)₂ | 23.6 |
| MPP | 3, 7, 13, 20, 30, 40 |

All the compositions pass UL-94, V0 flame test, without dripping.

### Examples 11-14

| | (parts by wt.) |
|---|---|
| Elvax 470 | 100 |
| Irganox 1010 | 2.7 |
| Irganox MD 1024 | 2.7 |
| DBDPO | 30, 40, 50, 70 |
| Sb₂O₃ | 26.7 |
| Mg(OH)₂ | 23.6 |
| MPP | 11 |

All these compositions pass UL-94, V0 flame test without dripping.

### Examples 15-17

| | (parts by wt.) |
|---|---|
| Elvax 470 | 100 |
| Irganox 1010 | 2.7 |
| Irganox MD 1024 | 2.7 |
| DBDPO | 40 |
| Sb₂O₃ | 15.25,40 |
| Mg(OH)₂ | 23.6 |
| MPP | 11 |

All these compositions pass the UL-94, V0 flame test without dripping.

### Examples 18-21

| | (parts by wt.) |
|---|---|
| Elvax 470 | 100 |
| Irganox 1010 | 2.7 |
| Irganox MD1024 | 2.7 |
| DBDPO | 55.6 |
| Sb₂O₃ | 26.7 |
| Mg(OH)₂ | 8, 16, 32, 64 |
| MPP | 11 |

All these compositions pass the UL-94, V0 flame test without dripping.

### Example 22

| | (parts by wt.) |
|---|---|
| Elvax 470 | 100 |
| Irganox 1010 | 2.7 |
| Irganox MD 1024 | 2.7 |
| DBDPO | 556 |
| Sb₂O₃ | 26.7 |
| MgO | 23.6 |
| MPP | 11 |

This composition passes UL-94, V0 flame test without dripping.

### Example 23

| | (parts by wt.) |
|---|---|
| Elvax 470 | 100 |
| Irganox 1010 | 2.7 |
| Irganox MD1024 | 2.7 |
| DBDPO | 55.6 |
| Sb₂O₃ | 26.7 |
| ATH | 23.6 |
| MPP | 11 |

This composition passes the UL-94, V0 flame test without dripping.

### Example 24

| | (parts by wt.) |
|---|---|
| DPDA-6182 | 100 |
| Irganox 1010 | 2.7 |
| Irganox MD1024 | 2.7 |
| DBDPO | 55.6 |
| Sb₂O₃ | 26.7 |
| Mg(OH)₂ | 23.6 |
| MPP | 11 |

This formulation passes the UL-94, V0 flame test without dripping.

### Example 25

| | (parts by wt.) |
|---|---|
| DPDA 6005 | 100 |
| Irganox 1010 | 2.7 |
| Irganox MD1024 | 2.7 |
| DBDPO | 55.6 |
| Sb₂O₃ | 26.7 |
| Mg(OH)₂ | 23.6 |
| MPP | 11 |

This formulation passes the UL-94, V0 flame test without dripping.

### Example 26

| | (parts by wt.) |
|---|---|
| Elvax 470 | 100 |
| Irganox 1010 | 2.7 |
| Irganox MD1024 | 2.7 |
| Saytex® 8010 (decabromo diphenyl methane) | 55.6 |
| Sb₂O₃ | 26.7 |
| Mg(OH)₂ | 23.6 |
| MPP | 11 |

This formulation passes the UL-94, V0 flame test without dripping.

### Example 27

| | (parts by wt.) |
|---|---|
| Elvax 470 | 100 |
| Irganox 1010 | 2.7 |
| Irganox MD1024 | 2.7 |
| dodecachlorodimethane dibenzocyclooctene | 55.6 |
| Sb₂O₃ | 26 7 |
| Mg(OH)₂ | 23.6 |
| MPP | 11 |

This formulation passes the UL-94, V0 flame test without dripping

## Claims

1. A flame retardant, heat shrink tube comprising a normally flammable, semi-crystalline polymer selected from the group consisting of ethylene vinyl acetate, ethylene ethyl acetate, and low density polyethylene blended with an effective amount of a flame retardant composition comprising a synergistic flame retardant combination of 1.5 to 10 percent by weight of a melamine pyrophosphate and 10 to 40 percent by weight of a halogenated flame retardant and an additive selected from the group consisting of alkaline earth metal oxides and hydroxides, silicon dioxides, titanium dioxide, zinc oxide, aluminium oxide, aluminium oxide trihydrate, and antimony oxide, wherein said effective amount is sufficient to achieve a test standard rating of said heat shrink tube of at least V-0 according to UL 94.

2. The flame retardant, heat shrink tube according to claim 1 wherein said halogenated flame retardant is selected from the group consisting of decabromodiphenyl oxide, decabromodiphenylmethane and dodecachlorodimethanedibenzocyclooctene.

3. The flame retardant, heat shrink tube according to claim 1, wherein the additive is present in an amount of from 2 to 30 percent by weight of the total composition.

## Patentansprüche

1. Flammenhemmender Schrumpfschlauch, umfassend ein normalerweise entflammbares, teilkristallines Polymer, das aus der Gruppe ausgewählt ist, die aus Ethylenvinylacetat, Ethylenethylacetat und Polyethylen mit niedriger Dichte besteht, abgemischt mit einer wirksamen Menge einer flammenhemmenden Zusammensetzung, die eine synergistische Flammenhemmstoffkombination aus 1,5 bis 10 Gewichtsprozent eines Melaminpyrophosphats und 10 bis 40 Gewichtsprozent eines halogenierten Flammenhemmstoffs umfasst, und einem Zusatzstoff, der aus der Gruppe ausgewählt ist, die aus Erdalkalimetalloxiden und -hydroxiden, Siliziumdioxiden, Titandioxid, Zinkoxid, Aluminiumoxid, Aluminiumoxidtrihydrat und Antimonoxid besteht, wobei die wirksame Menge ausreichend ist, um eine Prüfnormbewertung des Schrumpfschlauches gemäß UL 94 von mindestens V-0 zu erreichen.

2. Flammenhemmender Schrumpfschlauch nach Anspruch 1, wobei der halogenierte Flammenhemmstoff aus der Gruppe ausgewählt ist, die aus Decabromdiphenyloxid, Decabromdiphenylmethan und Dodecachlordimethandibenzocycloocten besteht.

3. Flammenhemmender Schrumpfschlauch nach Anspruch 1, wobei der Zusatzstoff in einer Menge von 2 bis 30 Gewichtsprozent der Gesamtzusammensetzung vorliegt.

## Revendications

1. Tube thermorétractable ignifugé comprenant un polymère semi-cristallin normalement inflammable sélectionné dans le groupe constitué de l'éthylène-acétate de vinyle, de l'éthylène-acétate d'éthyle, et du polyéthylène de faible densité, mélangé avec une quantité efficace d'une composition ignifuge comprenant une combinaison ignifuge synergique constituée d'un pourcentage pondéral de 1,5 à 10 % d'un pyrophosphate de mélamine et d'un pourcentage pondéral de 10 à 40 % d'une substance ignifuge halogénée et un additif sélectionné dans le groupe constitué des oxydes et hydroxydes de métaux alcalino-terreux, des dioxydes de silicium, du dioxyde de titane, de l'oxyde de zinc, de l'alumine, du trihydrate d'alumine, et de l'oxyde d'antimoine, dans lequel ladite quantité efficace est suffisante pour que ledit tube thermorétractable obtienne un résultat d'au moins V-0 au test normalisé UL 94.

2. Tube thermorétractable ignifugé selon la revendication 1, dans lequel ladite substance ignifuge halogénée est sélectionnée dans le groupe constitué de l'oxyde de décabromodiphényle, du décabromodiphénylméthane et du dodécachloro-diméthanedibenzocyclooctène.

3. Tube thermorétractable ignifugé selon la revendication 1, dans lequel l'additif est présent dans une quantité représentant un pourcentage pondéral de 2 à 30 % de la composition totale.
